# EUROPÄISCHE PATENTSCHRIFT

(11) **EP 2 284 015 B1**
(45) Veröffentlichungstag und Bekanntmachung des Hinweises auf die Patenterteilung: **29.02.2012**
(21) Anmeldenummer: 10014326.2
(22) Anmeldetag: 23.01.2006
(51) Int. Cl.: B42D 15/00, B41M 3/14

(54) **Sicherheitselement und Verfahren zu seiner Herstellung**
Security element and its production
Elément de sécurité et sa fabrication

(30) Priorität: 27.01.2005 DE 102005003958
(43) Veröffentlichungstag der Anmeldung: 16.02.2011
(62) Teilanmeldung aus: 06706357.8
(73) Patentinhaber: Giesecke & Devrient GmbH, 81677 München (DE)
(72) Erfinder: Heim, Manfred, 83646 Bad Tölz (DE); Depta, Georg, 83022 Rosenheim (DE); Dörfler, Walter, 81373 München (DE); Mayer, Karlheinz, 87544 Blaichach (DE); Kaule, Wittich, 82275 Emmering (DE)
(74) Vertreter: Zeuner Summerer Stütz

(56) Entgegenhaltungen:
- WO-A1-02/36357
- US-A1- 2003 161 017
- US-A1- 2004 232 691

## Beschreibung

Die Erfindung betrifft ein Sicherheitselement, insbesondere für ein Wertdokument, mit einer Reflexionsschicht, in die durch Einwirkung von Laserstrahlung visuell erkennbare Kennzeichnungen in Form von Mustern, Buchstaben, Zahlen oder Bildern eingebracht sind. Die Erfindung betrifft ferner einen Datenträger und eine Endlosfolie mit einem derartigen Sicherheitselement sowie ein Verfahren zum Erzeugen eines solchen Sicherheitselements.

Datenträger, wie Wert- oder Ausweisdokumente, oder auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Datenträger im Sinne der vorliegenden Erfindung sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, sowie Produktsicherungselemente, wie Etiketten, Siegel, Verpackungen und dergleichen. Der Begriff "Datenträger" schließt im Folgenden alle derartigen Gegenstände, Dokumente und Produktsicherungsmittel ein.

Aufgrund der leichten Verfügbarkeit und hohen Qualität der Reproduktionen, die mit modernen Farbkopiergeräten oder hochauflösenden Scannern in Verbindung mit guten Farbdruckern erstellt werden können, besteht ein Bedürfnis, die Fälschungssicherheit der betreffenden Sicherheitselemente zu erhöhen. Vielfach werden daher als Sicherheitselemente optisch variable Elemente eingesetzt, die dem Betrachter unter unterschiedlichen Betrachtungswinkeln einen unterschiedlichen Bildeindruck, beispielsweise einen unterschiedlichen Farbeindruck vermitteln. Oft kommen auch Sicherheitselemente mit optischen Beugungsstrukturen, wie Hologrammen, holographischen Gitterbildern und anderen hologrammähnlichen Beugungsstrukturen, zum Einsatz, die unter unterschiedlichen Betrachtungswinkeln unterschiedliche Bilder rekonstruieren. Derartige betrachtungswinkelabhängige Effekte können mit normalen Kopier- oder Drucktechniken nicht reproduziert werden.

Für Markierungszwecke und zur Erhöhung der Fälschungssicherheit werden im Sicherheitsbereich oft nachträglich partielle Durchsichtsbereiche in Metallschichten, wie etwa den Reflexionsschichten der angesprochenen Hologramme oder hologrammähnlichen Beugungsstrukturen, eingefügt. Solche Durchsichtsbereiche werden meist durch Ätztechnik oder über Waschverfahren hergestellt.

Beispielsweise wird bei dem in der Druckschrift WO 99/13157 A1 beschriebenen Demetallisierungsverfahren eine Trägerfolie unter Verwendung einer Druckfarbe mit hohem Pigmentanteil mit einem gewünschten Muster bedruckt. Aufgrund des hohen Pigmentanteils bildet die Druckfarbe nach dem Trocknen einen porigen, erhabenen Farbauftrag. Auf der bedruckten Trägerfolie wird dann eine dünne Metallschicht gebildet, die im Bereich des Farbauftrags den Farbkörper wegen seiner großen Oberfläche und der porösen Struktur nur teilweise abdeckt. Der Farbauftrag und die darüber liegende Metallschicht können dann durch Auswaschen mit einem geeigneten Lösungsmittel entfernt werden, so dass in der Metallschicht in den ursprünglich bedruckten Bereichen der Trägerfolie Aussparungen erzeugt werden. Derartige Demetallisierungsverfahren weisen insbesondere die folgenden Nachteile auf.

Alle Verfahren erfordern mit einem Druckvorgang, einem Metallisierungsschritt und einem Demetallisierungsschritt drei separate Arbeitsschritte. Ferner ist die Positionsgenauigkeit der Demetallisierungsmuster durch die Positionsgenauigkeit des Druckvorgangs limitiert. Dies bedeutet in der Praxis, dass die Demetallisierungsmuster meist einige zehntel Millimeter Toleranz zu eventuellen anderen auf der Trägerfolie vorhandenen Motiven, wie etwa holographischen Motiven oder anderen Druckmotiven, haben können. Bei sehr kleinen Folienbereichen mit hoher Motivdichte kann dies nachteilig sein. Darüber hinaus unterliegen die Demetallisierungsmuster Schwankungen in der Detailtreue, wie sie vom Druckprozess herrühren, die für sehr kleine Beschriftungen, wie etwa Mikrotexte in Sicherheitsfäden, ein Problem darstellen können.

Laserdemetallisierung erlaubt zwar eine größere Detailtreue und einen Verzicht auf Druckwerkzeuge, der Prozess ist jedoch für industrielle Anwendungen gegenwärtig um Größenordnungen zu langsam. Dies liegt einerseits daran, dass der Laserstrahl über die Ablenkspiegel nicht beliebig schnell abgelenkt werden kann, andererseits kann der Strahl nur so schnell über die Folie geführt werden, dass seine eingebrachte Leistung pro Fläche noch zum Ablatieren des aufgebrachten Metalls führt. Eine beliebige Erhöhung der Laserleistung ist dabei nicht möglich, da ansonsten die Strahlschärfe für feine Strukturen nicht mehr erreicht werden kann.

Die Passerschwankungen von Laser-Demetallisierungsbereichen zu anderen Motiven auf der Folie sind vergleichbar zu herkömmlichen Verfahren, da der Laser beim Laserdemetallisieren mittels Passermarken auf die zu demetallisierenden Folien eingesteuert werden muss. Die beiden genannten Nachteile führen dazu, dass die Laserdemetallisierung derzeit weder im Verpackungsbereich noch im Sicherheitsbereich in der Großflächenproduktion zum Einsatz kommt.

Die Druckschrift EP 1197 350 A2 beschreibt ein spezielles Ausführungsbeispiel eines beugungsoptischen Sicherheitselements, nämlich ein optisches Element für Wertdokumente, das ein zweikanaliges Hologramm zur Rekonstruktion holographischer Bilder aus verschiedenen Blickrichtungen aufweist. Jedes holographisch reproduzierte Bild, das nur unter einer Blickrichtung visuell zu erkennen ist, entspricht dabei einem Kanal. Den einzelnen Kanälen sind jeweils verschiedene Flächenbereiche des Hologramms zugeordnet. Der einem Kanal entsprechende Bereich des Hologramms kann in eine Vielzahl von Subbereichen unterteilt sein. Diese Subbereiche sind beispielsweise als schmale Streifen ausgeführt. Die zu verschiedenen Kanälen gehörenden Streifen werden dabei vorzugsweise alternierend angeordnet. Obgleich die jeweils zusammengehörenden Subbereiche eines beugungsoptischen Bildes voneinander beabstandet sind, erzeugen sie unter dem vorgegebenen definierten Betrachtungswinkel ein gemeinsames Beugungsbild. In den streifenförmigen Subbereichen werden vorzugsweise mithilfe eines Lasers Unterbereiche so verändert, dass sie an der Bildrekonstruktion nicht mehr teilnehmen und vor dem holographischen Hintergrund eine Information darstellen.

Um einen solchen Effekt zu erzielen, ist es erforderlich, die mit dem Laser erzeugten Informationen sehr exakt in die jeweils zu einem Kanal gehörenden Teilbereiche bzw. Streifen einzubringen. Dies bedeutet, dass während des Laserbeschriftungsverfahrens zunächst festgestellt werden muss, zu welchem der Kanäle der aktuell zur Beschriftung anstehende Streifen gehört. Dies geschieht durch Überprüfen der Richtung, in welche einfallendes Licht gebeugt und damit ein holographisches Bild rekonstruiert wird. Die Überprüfung erfolgt beispielsweise mittels fokussierter Leuchtdioden als Lichtquellen und optischen Detektoren, wie etwa einer Kamera, zur Bestimmung des zugehörigen Betrachtungswinkels. Ein derartiges Verfahren ist sehr aufwändig, wobei der apparative Aufwand und die erforderliche Präzision zudem mit der Feinheit der Teilbereiche, in die die einzelnen Kanäle räumlich aufgelöst werden, zunimmt. Für die Herstellung großer Stückzahlen ist dieses Verfahren daher nur wenig geeignet.

Ausgehend davon liegt der Erfindung die Aufgabe zugrunde, ein Sicherheitselement zu schaffen, das die Nachteile des Standes der Technik vermeidet. Insbesondere sollen die gewünschten Kennzeichnungen sich rasch und mit vertretbarem apparativem Aufwand in das Sicherheitselement einschreiben lassen.

Diese Aufgabe wird durch das Sicherheitselement mit den Merkmalen des Hauptanspruchs gelöst. Ein Datenträger und eine Endlosfolie mit einem derartigen Sicherheitselement, sowie ein Verfahren zum Erzeugen solcher Sicherheitselemente sind in den nebengeordneten Ansprüchen angegeben. Weiterbildungen der Erfindung sind Gegenstand der Unteransprüche.

Nach der Erfindung weist die Reflexionsschicht eines Sicherheitselements der eingangs genannten Art einen ersten Teilbereich mit einer Interferenzstruktur und einen zweiten Teilbereich auf, wobei die beiden Teilbereiche mit der Laserstrahlung unterschiedlich wechselwirken, so dass die Kennzeichnungen aufgrund einer durch die Einwirkung der Laserstrahlung bewirkten Änderung der optischen Eigenschaften der Reflexionsschicht zumindest eines der beiden Teilbereiche visuell erkennbar sind. Wie nachfolgend im Detail erläutert, kann die unterschiedliche Wechselwirkung der Teilbereiche beispielsweise dazu genutzt werden, um die Positionsgenauigkeit der eingebrachten Kennzeichnungen von der Positionsgenauigkeit der Laserbeschriftung zu entkoppeln und so trotz einfacher und schneller Strahlführung hochpräzise Kennzeichnungen zu erzeugen. In Sicherheitselementen, die ineinander verschachtelt angeordnete Subbereiche mit einer Ausdehnung unterhalb der Auflösungsgrenze des bloßen Auges aufweisen, können die Unterschiede in der Wechselwirkung ausgenutzt werden, um gezielt eine Kennzeichnung in einen der Teilbereiche einzubringen, ohne eine Erkennung des jeweils aktuell vom Laserschreiber erfassten Subbereichs vornehmen zu müssen.

Die Kennzeichnungen können dabei nur im ersten Teilbereich oder auch in beiden Teilbereichen eingebracht sein. Im letzteren Fall sind in der Regel zwei Beschriftungsschritte erforderlich, wobei in einem ersten Beschriftungsschritt eine Kennzeichnung in den ersten Teilbereich eingebracht wird und in einem zweiten Beschriftungsschritt eine Kennzeichnung in den zweiten Teilbereich eingebracht wird. Dabei wird typischerweise die Polarisation der Laserstrahlung und/ oder die Orientierung des zu beschriftenden Sicherheitselements zwischen dem ersten und zweiten Beschriftungsschritt geeignet verändert.

In einer Ausgestaltung der Erfindung enthält der erste Teilbereich als Interferenzstruktur eine Reliefstruktur in Form eines Gittermusters, das durch eine erste Gitterkonstante und eine erste Orientierung der Gitterlinien definiert ist.

Der zweite Teilbereich enthält eine Reliefstruktur in Form eines Gittermusters, das durch eine zweite Gitterkonstante und eine zweite Orientierung der Gitterlinien definiert ist.

Enthalten beide Teilbereiche ein Gittermuster, so kann eine unterschiedliche Wechselwirkung mit Vorteil dadurch erreicht werden, dass sich die zweite Gitterkonstante und/ oder die zweite Orientierung der Gitterlinien des zweiten Teilbereichs von der ersten Gitterkonstante bzw. der ersten Orientierung der Gitterlinien des ersten Teilbereichs unterscheidet.

Insbesondere kann die zweite Orientierung der Gitterlinien im Wesentlichen senkrecht zur ersten Orientierung stehen, um eine unterschiedliche Wechselwirkung mit linear polarisierter Strahlung zu erzielen. In einer bevorzugten Gestaltung weisen die beiden Teilbereiche ein Gittermuster mit einer Gitterkonstante von 200 bis 2000 nm, vorzugsweise von 500 bis 1000 nm, und mit unterschiedlicher Orientierung der Gitterlinien auf.

Eine weitere Möglichkeit, eine unterschiedliche Wechselwirkung für zwei mit Gittermustern gefüllte Teilbereiche zu erzeugen, besteht in der Verwendung von Gittermustern mit unterschiedlichen Gitterprofilen für den ersten und zweiten Teilbereich.

Als besonders vorteilhaft haben sich Gestaltungen herausgestellt, bei denen die Gittermuster des Sicherheitselements durch Rechteckgitter gebildet sind. Bevorzugt sind die Gitterlinien elektrisch voneinander isoliert, vorzugsweise durch metallfreie Bereiche an den Flanken des Rechteckgitters.

Besonders bevorzugt sind Erfindungsvarianten, bei denen die beiden Teilbereiche mit polarisierter Laserstrahlung unterschiedlich stark wechselwirken.

Dadurch kann auf einfache Weise ein erheblicher Unterschied in der Stärke der Wechselwirkung erreicht werden.

Nach einem anderen Erfindungsaspekt enthalten die Sicherheitselemente als Interferenzstruktur ein Dünnschichtelement mit Farbkippeffekt. Das Dünnschichtelement weist dabei zweckmäßig eine Reflexionsschicht, eine Absorberschicht und eine zwischen der Reflexionsschicht und der Absorberschicht angeordnete dielektrische Abstandsschicht auf. Beide Teilbereiche enthalten Dünnschichtelemente mit Farbkippeffekt, und die Dicke der dielektrischen Abstandsschicht der Dünnschichtelemente ist in beiden Teilbereichen unterschiedlich.

Die Erfindung beruht in diesem Aspekt auf dem Gedanken, dass durch die Wahl der Dicke der dielektrischen Abstandsschicht auch die Stärke der Wechselwirkung der Dünnschichtelemente mit Laserstrahlung einer bestimmten Wellenlänge festgelegt werden kann. Gestaltet man die Dünnschichtelemente in den beiden Teilbereichen mit deutlich unterschiedlicher Absorption für die gewählte Laserwellenlänge, so kann die Kennzeichnung wie bei den oben beschriebenen Ausführungsbeispielen erfolgen. Erfolgt die die Kennzeichnung insbesondere mittels IR-Laser, können die Dünnschichtelemente im sichtbaren Spektralbereich je nach dem gewünschten Design identische oder unterschiedliche Farbkippeffekte aufweisen.

In der Erfindung ist vorgesehen, dass die beiden Teilbereiche aus ineinander verschachtelten Subbereichen gebildet sind. Sind beide Teilbereiche mit Kennzeichnungen versehen, so können diese dabei ebenfalls ineinander verschachtelt sein. Die Subbereiche können insbesondere aus parallelen Streifen, vorzugsweise mit einer Streifenbreite zwischen 10 µm und 500 µm, bestehen.

Bei einer weiteren Gestaltung des erfindungsgemäßen Sicherheitselements enthält der erste Teilbereich eine oberflächenvergrößernde Reliefstruktur, vorzugsweise eine oberflächenvergrößernde Reliefstruktur mit einer gekreuzten sinusförmigen Oberflächentopographie. Die Oberflächentopographie kann beispielsweise eine Höhe von 50 bis 5000 nm, vorzugsweise von 100 bis 500 nm, und in x- und y-Richtung jeweils eine Gitterkonstante von 200 bis 1000 nm aufweisen. Der zweite Teilbereich weist dabei mit Vorteil keine Reliefstruktur auf. Ausgenutzt wird bei dieser Gestaltung, dass die Oberfläche des Sicherheitselements durch gezieltes Einführen eines Oberflächenreliefs in diesem Teilbereich vergrößert und die Dicke einer darauf abgeschiedenen Metallschicht somit verringert werden kann. Die dünnere Metallschicht kann im Demetallisierungsschritt mit einer Laserleistung entfernt werden, die die dickere Metallschicht noch nicht abträgt, so dass sich auch hier unterschiedliche Wechselwirkungen mit der Laserstrahlung ergeben.

In einer bevorzugten Weiterbildung der Erfindung ist die Reflexionsschicht Teil einer oder mehrerer optisch variabler Strukturen, insbesondere eines Hologramms, eines holographischen Gitterbilds oder einer anderen hologrammähnlichen Beugungsstruktur. Die Passerschwankungen zwischen den visuell erkennbaren Kennzeichnungen und der oder den optisch variablen Strukturen liegen dabei mit Vorteil unterhalb von 10 µm, insbesondere unterhalb von 5 µm.

Die Erfindung enthält auch ein Verfahren nach dem Anspruch 7 zum Erzeugen eines mit visuell erkennbaren Kennzeichnungen in Form von Mustern, Buchstaben, Zahlen oder Bildern versehenen Sicherheitselements.

Zur Kennzeichnung wird das Sicherheitselement bevorzugt mit Laserstrahlung beaufschlagt, deren Wellenlänge größer als die erste und/ oder die zweite Gitterkonstante ist.

Verschiedene Effekte können zur Kennzeichnung der Teilbereiche ausgenutzt werden. In einer Erfindungsvariante wird die Abhängigkeit der Wechselwirkung von der Polarisation der Laserstrahlung ausgenutzt, in einer anderen die Abhängigkeit der Wechselwirkung von der Gitterkonstante in den beiden Teilbereichen. Eine weitere Variante verwendet die Abhängigkeit der Wechselwirkung von der Orientierung der Gitterlinien in den beiden Teilbereichen. Auch die Abhängigkeit der Wechselwirkung von dem Gitterprofil in den beiden Teilbereichen kann ausgenutzt werden.

In einer vorteilhaften Verfahrensvariante wird das Sicherheitselement zur Kennzeichnung mit linear polarisierter Laserstrahlung beaufschlagt, deren Polarisationsvektor im Wesentlichen parallel zu den Gitterlinien des Teilbereichs gewählt ist, in den die Kennzeichnung eingebracht werden soll.

Die Erfindung enthält auch ein Verfahren nach Anspruch 11 zum Erzeugen eines mit visuell erkennbaren Kennzeichnungen in Form von Mustern, Buchstaben, Zahlen oder Bildern versehenen Sicherheitselements.

In beiden Verfahrensvarianten wird die Laserleistung (bei Dauerstrich-Lasern) oder die Laserenergie (bei gepulsten Lasern) zweckmäßig so eingestellt, dass ihre Intensität aufgrund der unterschiedlichen Wechselwirkungsstärke zur Entfernung der Reflexionsschicht im ersten Teilbereich ausreicht, während sie im zweiten Teilbereich noch nicht zur Entfernung der Reflexionsschicht ausreichend ist.

Es bietet sich an, das Sicherheitselement zur Kennzeichnung mit Strahlung eines Infrarotlasers im Wellenlängenbereich von 0,8 µm bis 3 µm, insbesondere eines Nd:YAG-Lasers, zu beaufschlagen. Die erfindungsgemäße Lösung erlaubt darüber hinaus die Verwendung eines aufgeweiteten Laserstrahls, der zumindest teilweise beide Teilbereiche zugleich erfasst.

In einer vorteilhaften Variante kann das Sicherheitselement zur Kennzeichnung unter einem aufgeweiteten Laserstrahl hindurch bewegt werden, wobei der aufgeweitete Laserstrahl senkrecht zur Bewegungsrichtung den gesamten zu kennzeichnenden Bereich des Sicherheitselements erfasst. Auf eine Ablenkung des Laserstrahls kann dann vollständig verzichtet werden.

Alternativ wird das Sicherheitselement zur Kennzeichnung unter einem Laserstrahl hindurch bewegt und der Laserstrahl senkrecht zur Bewegungsrichtung des Sicherheitselements abgelenkt. Der Laserstrahl kann, muss aber nicht notwendig aufgeweitet sein.

Im Folgenden wird eine Vorrichtung beschrieben zur Durchführung des beschriebenen Verfahrens mit Mitteln zum Erzeugen eines Sicherheitselements mit einem ersten Teilbereich mit einer Reliefstruktur und mit einem zweiten Teilbereich, Mitteln zum Aufbringen einer Reflexionsschicht auf den ersten und zweiten Teilbereich, und einer Laserquelle zum Einbringen der Kennzeichnungen, die aufgrund einer durch die Einwirkung der Laserstrahlung bewirkten Änderung der optischen Eigenschaften der Reflexionsschicht zumindest eines der beiden Teilbereiche visuell erkennbar sind.

Die Laserquelle ist vorzugsweise ein Infrarotlaser im Wellenlängenbereich von 0,8 µm bis 3 µm, insbesondere ein Nd:YAG-Laser bei 1,06 µm. Die Vorrichtung kann ferner einen Polarisator zur einstellbaren Polarisation der Laserstrahlung, optische Elemente zur Aufweitung des Laserstrahls auf eine gewünschte Größe des Laserflecks, eine Ablenkeinrichtung zur Strahlführung des Laserstrahls und/oder eine Transporteinrichtung zur Führung von auf einer Bahn angeordneten Sicherheitselementen enthalten.

Die Erfindung umfasst ferner einen Datenträger, insbesondere ein Wertdokument, wie eine Banknote, eine Ausweiskarte oder dergleichen, der mit einem Sicherheitselement der beschriebenen Art versehen ist. Auch eine mit einem Sicherheitselement der beschriebenen Art ausgestattete Endlosfolie, insbesondere eine Prägefolie, ist Bestandteil der Erfindung.

Ein besonderer Vorteil der Erfindung wird in der Möglichkeit gesehen, Negativkennzeichnungen, wie etwa Negativtext, passergenau in Hologrammfolien einzubringen. Während mit herkömmlichen Demetallisierungsverfahren eine passergenaue Einbringung der demetallisierten Bereiche in ein vorgegebenes Hologrammdesign oftmals schwierig ist und zu unerwünschten Schwankungen in der Positionierung der demetallisierten Bereiche führen kann, ermöglicht es die Erfindung erstmals, eine Nulltoleranz zwischen Kennzeichnung und Hologrammdesign zu erreichen. Wie oben geschildert und nachfolgend anhand bevorzugter Ausführungsbeispiele illustriert, ist diese perfekte Passerung eine Folge des erfindungsgemäßen Prinzips, den später zu demetallisierenden Bereich bereits mit dem Hologrammdesign selbst vorzugeben. Der zu demetallisierende Bereich kann dabei sowohl innerhalb eines Hologrammmusters als auch im Zwischenraum zwischen mehreren Hologrammmustern angeordnet sein.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem Si- cherheitselement nach einem Ausführungsbeispiel der Erfin- dung,
- Fig. 2: einen Ausschnitt eines Sicherheitselements, wie dem rechtecki- gen Etikett der Fig. 1, wobei (a) das Sicherheitselement vor, und (b) nach der Beaufschlagung mit Laserstrahlung zeigt,
- Fig. 3: in (a) bis (d) verschiedene Möglichkeiten, eine unterschiedliche Wechselwirkungsstärke für zwei Teilbereiche mithilfe ver- schieden ausgebildeter Gittermuster zu erreichen,
- Fig. 4: in (a) bis (c) eine Gitterstruktur, bei der die unterschiedliche Wechselwirkungsstärke für verschiedene Teilbereiche mithilfe unterschiedlich orientierter Rechteckgitter erreicht wird,
- Fig. 5: eine Skizze zur Erläuterung des Aufbauprinzips für Sicher- heitselemente, bei denen die Teilbereiche aus ineinander ver- schachtelt angeordneten Subbereichen bestehen,
- Fig. 6: in (a) bis (c) Zwischenschritte bei der Kennzeichnung eines Si- cherheitselement nach Fig. 5, und in (d) und (e) das Erschei- nungsbild des fertigen Sicherheitselements bei Betrachtung schräg von links bzw. rechts,
- Fig. 7: ein weiteres Ausführungsbeispiel der Erfindung im Quer- schnitt,
- Fig. 8: den Aufbau eines weiteren Ausführungsbeispiels der Erfin- dung mit drei Hologrammbereichen in Aufsicht,
- Fig. 9: in (a) eine Aufsicht auf ein Sicherheitselement mit einer alter- nierenden Abfolge streifenförmiger Subbereiche und in (b) eine Querschnittsdarstellung entlang der Linie B-B von (a), und
- Fig. 10: ein Sicherheitselement mit einem in einen Teilbereich einge- brachten Oberflächenrelief nach noch einem weiteren Ausfüh- rungsbeispiel der Erfindung, wobei (a) das Sicherheitselement zwischen Bedampfungsschritt und Laserbeschriftung, und (b) nach der Laserbeschriftung zeigt.

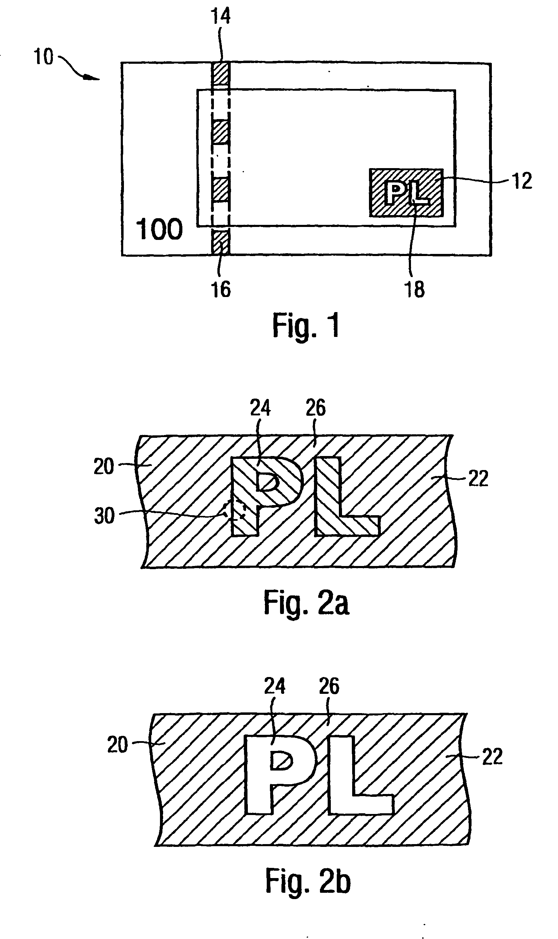

Die Erfindung wird nun am Beispiel einer Banknote erläutert. Fig.1 zeigt eine Banknote 10, die mit wenigstens einem erfindungsgemäßen Sicherheitselement 12 versehen ist. Die Banknote kann auch weitere Sicherheitselemente, wie einen Sicherheitsfaden 14, aufweisen. In Fig. 1 ist der Sicherheitsfaden 14 als Fenstersicherheitsfaden dargestellt. Ein solcher Fenstersicherheitsfaden ist nur teilweise in das Banknotenpapier eingebettet und tritt in bestimmten Bereichen 16, die in der Figur schraffiert dargestellt sind, direkt an die Oberfläche der Banknote 10.

Das erfindungsgemäße Sicherheitselement 12 ist im Ausführungsbeispiel als rechteckiges Etikett dargestellt, in das durch Einwirkung von Laserstrahlung visuell erkennbare Kennzeichnungen 18 in Form von Mustern, Buchstaben, Zahlen oder Bildern eingebracht sind. Es versteht sich, dass das Sicherheitselement 12 auch jede beliebige andere Form aufweisen kann. So kann das Sicherheitselement 12 beispielsweise in Form eines breiten Streifens, der sich über die gesamte Länge oder Breite der Banknote erstreckt, auf der Banknotenoberfläche angeordnet sein. Das Sicherheitselement 12 kann auch in Form eines Sicherheitsfadens ausgeführt und wie der dargestellte Sicherheitsfaden 14 als Fenstersicherheitsfaden in die Banknote 10 eingebettet sein.

Zur Erläuterung des erfindungsgemäßen Prinzips zeigt Fig. 2 schematisch einen Ausschnitt eines Sicherheitselements 20, wie etwa dem rechteckigen Etikett 12 der Fig.1. Fig. 2(a) zeigt das Sicherheitselement 20 dabei vor, Fig. 2(b) nach der Beaufschlagung mit Laserstrahlung. Als Laserquellen können alle in Personalisierungsanlagen üblichen Laserschreiber zum Einsatz kommen. Im Ausführungsbeispiel ist als Laserquelle ein Nd:YAG-basierter Laserschreiber mit einer Wellenlänge von 1,064 µm gewählt, dessen Strahlung vor der Beaufschlagung durch ein in den Strahlengang gebrachtes Polarisationsfilter linear polarisiert wird.

Das Sicherheitselement 20 enthält eine metallische Reflexionsschicht 22, die einen ersten Teilbereich 24 und einen zweiten Teilbereich 26 aufweist, die sich hinsichtlich der Stärke ihrer Wechselwirkung mit der Strahlung des ausgewählten Nd:YAG-Lasers unterscheiden. Die Wechselwirkungseigenschaften der Teilbereiche sind dabei in der weiter unten beschriebenen Weise so auf die Laserstrahlung abgestimmt, dass der Teilbereich 24 deutlich stärker mit der Laserstrahlung wechselwirkt als der Teilbereich 26. Die Form des Teilbereichs 24 stellt innerhalb des umgebenden Teilbereichs 26 die gewünschte Kennzeichnung, im Ausführungsbeispiel die Buchstabenfolge "PL", dar.

Bei der Beaufschlagung des Sicherheitselements 20 mit Laserstrahlung wird die Energie bzw. Leistung der Laserquelle nun so eingestellt, dass sie im stärker wechselwirkenden Teilbereich 24 zur Demetallisation der Reflexionsschicht 22 ausreicht, während sie im schwächer wechselwirkenden Teilbereich 26 noch keine Demetallisation bewirkt. Es ist daher im Gegensatz zu herkömmlichen Beschriftungsverfahren nicht erforderlich, den Laserfleck exakt der Form der einzubringenden Kennzeichnung folgen zu lassen. Vielmehr genügt es, wenn die Laserstrahlung den Teilbereich 24 überstreicht, um den Teilbereich 24 vollständig und mit exakter Umrissführung zu demetallisieren, wie in Fig. 2(b) dargestellt.

Da die Exaktheit der Laserablenkung nicht mehr die Exaktheit der eingebrachten Kennzeichnung bestimmt, kann wesentlich schneller um Ecken abgelenkt werden und die Demetallisierung insgesamt gegenüber herkömmlicher Laserdemetallisierung wesentlich beschleunigt werden. Beispielsweise kann das zu bearbeitende Substrat zeilenweise mit hoher Vorschubgeschwindigkeit abgerastert werden. In anderen Gestaltungen kann ein sehr starker Laser mit einem weit aufgeweiteten Strahl zum Einsatz kommen, der gar nicht mehr abgelenkt werden muss, sondern bei dem nur die laufende Bahn mit den zu demetallisierenden Sicherheitselementen unter dem Lichtfleck hindurchbewegt werden muss. Die Form der demetallisierten Bereiche ist dann ausschließlich durch die Form des stärker wechselwirkenden Teilbereichs 24 bestimmt. Insgesamt ergibt sich eine erhebliche Beschleunigung, Vereinfachung und eine erhöhte Präzision der Laserbeschriftung.

Die unterschiedliche Wechselwirkungsstärke der Teilbereiche 24 und 26 mit der Strahlung der ausgewählten Laserquelle kann auf verschiedene Weise erreicht werden, wie in den Ansprüchen dargestellt.

Eine ausführliche Beschreibung solcher, für den Gegenstand der vorliegenden Anmeldung besonders geeigneter Anordnungen von Beugungsstrukturen, insbesondere auch der aus einer Mehrzahl von Subbereichen bestehenden und weiter unten genauer behandelten Beugungsstrukturanordnungen, findet sich in den ebenfalls anhängigen Anmeldungen DE 103 33 469 und WO2005009751.

Für die Erfindung ist vor allem von Bedeutung, dass die Wechselwirkung der metallisierten Beugungsgitter mit der Laserstrahlung stark von der relativen Größe von Gitterkonstante und Wellenlänge, und bei polarisierter Laserstrahlung auch von der relativen Orientierung der Gitterlinien und der Polarisationsrichtung der Strahlung abhängt. Insbesondere sind die Absorptionseigenschaften von Gittern mit einer Gitterkonstante, die kleiner als die verwendete Laserwellenlänge ist, stark polarisationsabhängig.

Ohne an eine bestimmte Erklärung gebunden zu sein, wird diese starke Polarisationsabhängigkeit bei metallisierten Gitterstrukturen dadurch erklärt, dass die Laserstrahlung bei einem parallel zu den elektrisch leitenden Gitterlinien stehenden Polarisationsvektor das Elektronengas des Metalls stark zu Schwingungen anregt, so dass eine starke Wechselwirkung des eingestrahlten Lichts mit der Metallschicht stattfindet. Ein großer Anteil der Strahlung wird reflektiert und ein gewisser Anteil absorbiert. Steht der Polarisationsvektor dagegen schräg oder sogar senkrecht zur Orientierung der Gitterlinien, so findet er in Schwingungsrichtung eine deutlich niedrigere Leitfähigkeit vor. Das Elektronengas kann kaum zu Schwingungen angeregt werden und es resultiert eine erheblich kleinere Wechselwirkungsstärke. Die einfallende Strahlung wird zu einem großen Teil transmittiert. Nur ein geringer Anteil wird reflektiert und absorbiert.

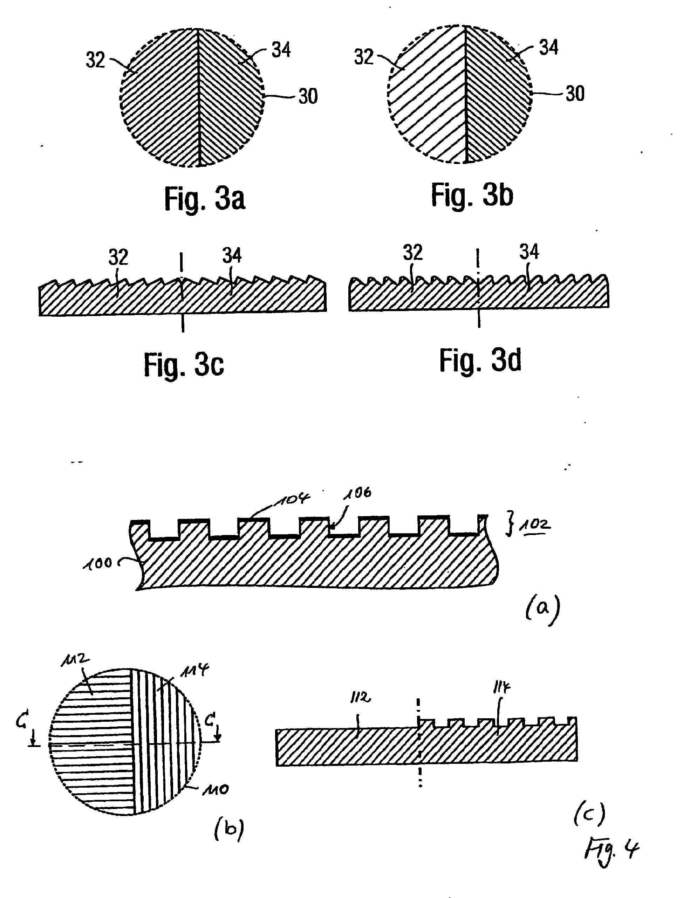

Fig. 3 illustriert in (a) bis (d) verschiedene Möglichkeiten, eine unterschiedliche Wechselwirkungsstärke für zwei Teilbereiche 32 und 34 mithilfe verschieden ausgebildeter Gittermuster zu erreichen. Dabei zeigen die Figuren 3(a) und (b) jeweils eine Aufsicht auf einen kleinen Ausschnitt 30 im Grenzbereich der beiden Teilbereiche 32, 34, wie beispielsweise den Bereich 30 in Fig. 2(a). Die Figuren 3(c) und (d) zeigen ein Sicherheitselement 20 in einem derartigen Grenzbereich im Querschnitt.

Bei dem Beispiel der Fig. 3(a) sind die Teilbereiche 32 und 34 jeweils mit einem Gittermuster mit einer Gitterkonstante von 900 nm gefüllt, wobei die Gitterlinien in den beiden Teilbereichen aufeinander senkrecht stehen. Bei Beaufschlagung des Sicherheitselements 20 mit geeignet orientierter, linear polarisierter Strahlung eines Nd:YAG-Laser kann so erreicht werden, dass nur der stark wechselwirkende Teilbereich demetallisiert wird, der schwächer wechselwirkende Teilbereich jedoch unangegriffen bleibt.

In einer anderen, in Fig. 3(b) gezeigten Gestaltung kann alternativ oder zusätzlich die Abhängigkeit der Wechselwirkungsstärke von der Gitterkonstante der Gittermuster in den Teilbereichen 32 und 34 ausgenutzt werden. Auch das Gitterprofil beeinflusst die Stärke der Wechselwirkung mit der Laserstrahlung, so dass eine unterschiedliche Absorption auch durch verschieden geblazte Gitter in den beiden Teilbereichen 32 und 34 erreicht werden kann, wie in Fig. 3(c) gezeigt. Auch Gittermuster mit gerundeten Gitterprofilen sind hierfür geeignet, wie in Fig. 3(d) illustriert.

Besonders gute Ergebnisse in Bezug auf die Richtungsabhängigkeit der Wechselwirkungsstärke polarisierter Laserstrahlung mit den Teilbereichen ergeben sich bei Verwendung von so genannten "Manhattan-Strukturen", die in Fig. 4 illustriert sind. Fig. 4(a) zeigt dazu einen idealisierten Querschnitt durch eine derartige Struktur 100 mit einem Rechteckprofil 102 und einer aufgebrachten metallischen Reflexionsschicht 104. Es versteht sich, dass das in der Figur idealisiert dargestellte Rechteckgitter 102 und die Metallisierung 104 bei realen Strukturen leicht verrundet sind. Eine besonders ausgeprägte Anisotropie der Absorption kann erreicht werden, wenn die einzelnen Gitterlinien des Rechteckgitters 102 durch fehlende Metallisierung an ihren Flanken 106 elektrisch voneinander isoliert sind, wie in Fig. 4(a) dargestellt.

Figuren 4(b) und (c) zeigen ein Ausführungsbeispiel, bei dem zwei Teilbereiche 112 und 114 mit um 90° gegeneinander gedrehter Orientierung der jeweiligen Rechteckgitterstrukturen aneinander stoßen. Fig. 4(b) zeigt dabei eine Aufsicht auf einen kleinen Ausschnitt 110 im Grenzbereich der beiden Teilbereiche 112,114 und Fig. 4(c) zeigt einen Querschnitt entlang der Linie C-C von Fig. 4(b). Der deutlicheren Darstellung halber ist die Metallisierung 104 in Fig. 4(c) nicht dargestellt.

Bei den bisher beschriebenen Ausführungsbeispielen weisen die verschiedenen Teilbereiche eine mit bloßem Auge auflösbare Ausdehnung auf. Die einzubringende Information kann dabei insbesondere durch die Form der Teilbereiche selbst gegeben sein, wie etwa in Fig. 2 illustriert. Das unterschiedliche Absorptionsverhalten der Teilbereiche wird ausgenutzt, um die Positionsgenauigkeit der eingebrachten Kennzeichnungen von der Positionsgenauigkeit der Laserstrahlführung zu entkoppeln und so trotz einfacher und schneller Strahlführung hochpräzise Kennzeichnungen zu erzeugen.

Nachfolgend werden Ausführungsbeispiele beschrieben, bei denen die Teilbereiche aus ineinander verschachtelt angeordneten Subbereichen mit einer Ausdehnung unterhalb der Auflösungsgrenze des bloßen Auges bestehen. Die den verschiedenen Teilbereichen zugeordneten Subbereiche sind dabei mit Gittermustern gefüllt, die beugungsoptische Bilder in unterschiedliche Betrachtungsrichtungen rekonstruieren. Das unterschiedliche Absorptionsverhalten der Teilbereiche wird ausgenutzt, um mit einem Laserschreiber eine Kennzeichnung gezielt in einen der Teilbereiche einzubringen, ohne eine Erkennung des jeweils aktuell vom beschriftenden Laserstrahl erfassten Subbereichs vornehmen zu müssen.

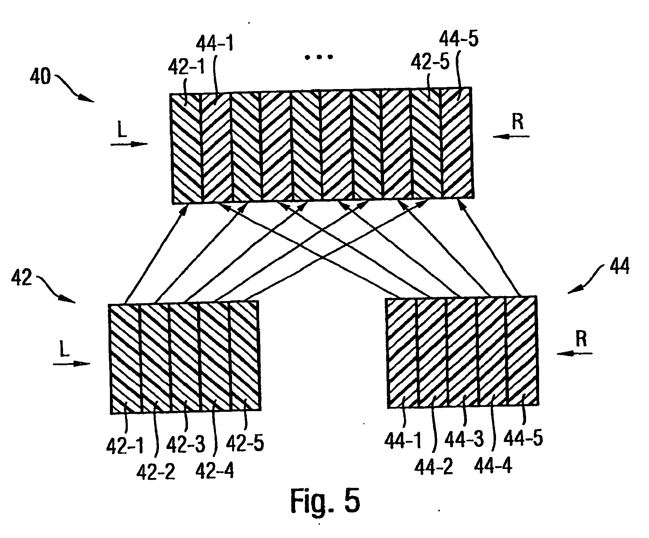

Fig. 5 erläutert das zugrunde liegende Prinzip. Das Sicherheitselement 40 weist als ersten Teilbereich einen ersten Hologrammbereich 42 auf, der bei schräger Betrachtung von links (Pfeil L) ein erstes beugungsoptisches Bild rekonstruiert. Als zweiten Teilbereich weist das Sicherheitselement 40 einen zweiten Hologrammbereich 44 auf, der bei schräger Betrachtung von rechts (Pfeil R) ein zweites beugungsoptisches Bild rekonstruiert. Die Hologrammbereiche 42, 44 sind in streifenförmige Subbereiche 42-1 bis 42-5 bzw. 44-1 bis 44-5 zerlegt, die im Ausführungsbeispiel jeweils eine Breite von lediglich 20 µm aufweisen und so mit bloßem Auge nicht aufgelöst werden können. Im fertigen Sicherheitselement 40 sind die Subbereiche 42-1 bis 42-5 und 44-1 bis 44-5 der beiden Hologrammbereiche 42, 44 ineinander verschachtelt. Im gezeigten Ausführungsbeispiel sind sie alternierend angeordnet, so dass auf den Subbereich 42-1 des ersten Hologrammbereichs 42 der Subbereich 44-1 des zweiten Hologrammbereichs 44 folgt, auf diesen der Subbereich 42-2 des ersten Hologrammbereichs und so fort.

Bei schräger Betrachtung des Sicherheitselements von links tragen nur die Subbereiche 42-1 bis 42- 5 zur Rekonstruktion eines beugungsoptischen Bildes bei, so dass der Betrachter das von dem Hologrammbereich 42 rekonstruierte Bild wahrnimmt. Bei schräger Betrachtung von rechts tragen dagegen lediglich die Subbereiche 44-1 bis 44-5 zur Rekonstruktion eines beugungsoptischen Bildes bei, so dass der Betrachter dann das von dem Hologrammbereich 44 rekonstruierte Bild wahrnimmt.

Obwohl die einzelnen Subbereiche 42-1 bis 42-5 bzw. 44-1 bis 44-5 beabstandet voneinander angeordnet sind, erscheinen dem Betrachter die aus den jeweiligen Betrachtungsrichtungen (L bzw. R) erkennbaren Hologramme 42, 44 aufgrund der geringen Breite und des kleinen Abstands der Subbereiche zusammenhängend. Es versteht sich, dass die Hologrammbereiche 42, 44 eine beliebige Zahl an derartigen Subbereichen 42-1 bis 42-n bzw. 44-1 bis 44-m aufweisen können. Auch muss die Breite der Subbereiche nicht identisch sein. Die Herstellung der streifenförmigen Subbereiche kann beispielsweise mithilfe einer Linienmaske erfolgen, die bei Belichtung eines beugungsoptischen Aufzeichnungsträgers jeweils den nicht zu belichtenden Teil des Aufzeichnungsträgers abdeckt. Alternativ können die Streifen auch direkt durch entsprechende Steuerung eines Elektronenstrahls in einem Aufzeichnungsmedium erzeugt werden. Die Zahl der Subbereiche oder Streifen kann ebenfalls beliebig gewählt werden und bei einer Streifenbreite von 20 µm beispielsweise 2500 betragen.

Nach der Erfindung sind in die beiden Hologrammbereiche 42, 44 (in Fig. 5 nicht dargestellte) Kennzeichnungen in Form von Unterbereichen eingebracht, die weder an der Bildrekonstruktion in Richtung L noch in Richtung R teilnehmen. Die Kennzeichnungen sollen dabei mit bloßem Auge erkennbar sein, erstrecken sich also in der Regel über eine große Zahl von Streifen 42-i bzw. 44-j. Falls die Kennzeichnungen nur in einen der Hologrammbereiche eingebracht werden sollen, oder falls die beiden Hologrammbereiche mit unterschiedlichen Kennzeichnungen versehen werden sollen, muss daher sichergestellt werden, dass die Streifen jeden Hologrammbereichs nur mit der für diese Betrachtungsrichtung gewünschten Kennzeichnung versehen werden.

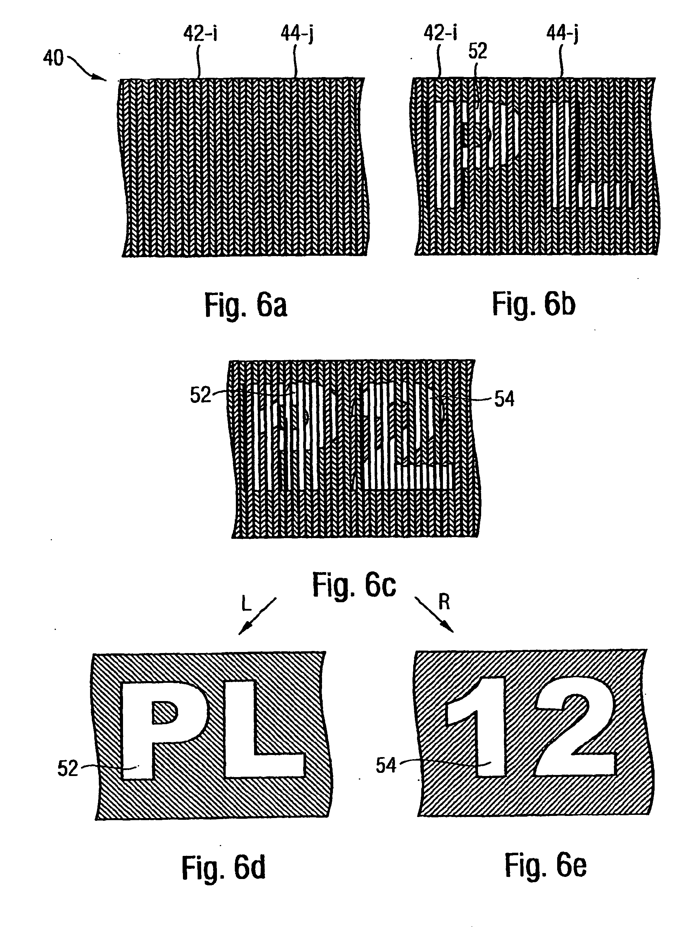

Um dieses Ziel ohne großen apparativen Aufwand für die Erkennung der jeweils zu beschriftenden schmalen Streifen 42-i bzw. 44-j zu erreichen, wird die unterschiedliche Wechselwirkungsstärke der Gittermuster der beiden Hologrammbereiche 42, 44 mit geeignet polarisierter Laserstrahlung ausgenutzt. Fig. 6(a) zeigt einen Ausschnitt des Sicherheitselements 40 vor der Laserbeschriftung. Wie beschrieben, sind die schmalen Streifen 42-i bzw. 44-j für die Rekonstruktion der Beugungsbilder in die Betrachtungsrichtung L bzw. R mit unterschiedlichen Gittermustern gefüllt.

In einem ersten Schritt wird nun die Polarisationsrichtung des Beschriftungslasers so gewählt, dass eine starke Wechselwirkung mit den Gittermustern der Streifen 42-i des ersten Hologrammbereichs 42 stattfindet und die Wechselwirkung mit den Gittermustern der Streifen 44-j des zweiten Hologrammbereichs 44 nur schwach ist. Bei geeigneter Leistung bzw. Energie des Lasers führt der nachfolgende Beschriftungsschritt dann nur in den Streifen 42-i, nicht jedoch in den Streifen 44-j zur Demetallisierung der auf die Gitter aufgebrachten Reflexionsschicht.

Wie in Fig. 6(b) dargestellt, kann durch geeignete Strahlführung so in die Streifen 42-i des ersten Hologrammbereichs 42 eine erste Kennzeichnung 52, hier die Buchstabenfolge "PL", eingeschrieben werden, ohne den Laserfleck auf die Streifen 42-i beschränken zu müssen. Es ergibt sich das in Fig. 6(b) gezeigte Erscheinungsbild, bei dem die Streifen 42-i in den beaufschlagten Unterbereichen demetallisiert sind, während die ebenfalls vom Laserstrahl erfassten Teile der Streifen 44-j aufgrund der geringen Wechselwirkungsstärke unverändert bleiben.

Anschließend wird die Polarisationsrichtung des Laserstrahls auf die Orientierung der Gitterlinien im zweiten Hologrammbereich 44 eingestellt, so dass nun eine starke Wechselwirkung mit den Gittermustern der Streifen 44-j des zweiten Hologrammbereichs 44 stattfindet und die Wechselwirkung mit den Gittermustern der Streifen 42-i des ersten Hologrammbereichs 42 nur schwach ist. Mit dieser Orientierung wird eine zweite Kennzeichnung 54, hier die Zahlenfolge "12", in den zweiten Hologrammbereich 44 eingeschrieben, wieder ohne den Laserstrahl auf die jeweiligen Streifen ausrichten zu müssen, da der Beschriftungsschritt nur in den Streifen 44-j, nicht jedoch in den ebenfalls erfassten Streifen 42-i zur Demetallisierung der auf die Gitter aufgebrachten Reflexionsschicht führt. Insgesamt ergibt sich die in Fig. 6(c) gezeigte gekennzeichnete Streifenfolge, bei der die Streifen 42-i und 44-j mit verschiedenen Kennzeichnungen versehen sind.

Die demetallisierten Bereiche 52, 54 tragen zur Bildrekonstruktion in die jeweilige Betrachtungsrichtung der Hologramme 42 bzw. 44 nicht mehr bei und bilden so Fehlstellen in den rekonstruierten Hologrammen. Der Informationsgehalt dieser Bereiche 52, 54 tritt für den Betrachter aus der jeweiligen Betrachtungsrichtung somit als dunkel erscheinende Kennzeichnung vor dem Hintergrund der hellen Beugungsbilder hervor, wie in Figuren 6(d) und (e) dargestellt.

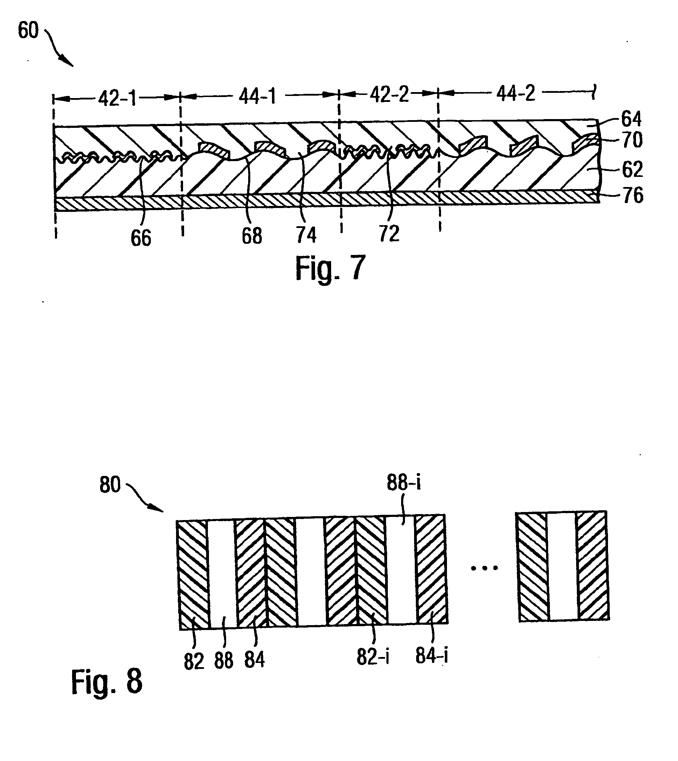

Fig. 7 zeigt im Querschnitt ein weiteres Ausführungsbeispiel der Erfindung, dessen Aufbau zunächst weitgehend dem des Sicherheitselements 40 der Fig. 6 entspricht. Insbesondere ist das Sicherheitselement 60 der Fig. 7 in Übereinstimmung mit dem Sicherheitselement 40 als Prägehologramm ausgeführt. Es weist daher zwei transparente Kunststoffschichten 62 und 64 auf, deren Grenzfläche in Form von geprägten Beugungsstrukturen 66 bzw. 68 ausgebildet ist. Der Ausschnitt der Fig. 7 zeigt je zwei Streifen 42-1 und 42-2 bzw. 44-1 und 44-2 der beiden Hologrammbereiche 42 und 44. Die Streifenarten unterscheiden sich in ihrem Gittermuster, so dass die Grenzfläche in den Streifen 42-1 und 42-2 mit einer ersten Beugungsstruktur 66 versehen ist, während die Grenzfläche der Streifen 44-1 und 44-2 eine zweite Beugungsstruktur 68 aufweist.

Der gesamte Grenzbereich zwischen den Kunststoffschichten 62, 64 ist mit einer Reflexionsschicht 70 versehen, die in den Streifen 42-1 und 42-2 Aussparungen 72 und in den Streifen 44-1 und 44-2 Aussparungen 74 aufweist, deren Form gerade den oben beschriebenen, durch Demetallisierung der Reflexionsschicht erzeugten Kennzeichnungen 52 bzw. 54 entsprechen. Bei der Reflexionsschicht 70 handelt es sich vorzugsweise um eine dünne Metallschicht, beispielsweise eine Aluminiumschicht.

In dieser Ausgestaltung mit den bisher beschriebenen Elementen eignet sich das Sicherheitselement 40 insbesondere zur Absicherung durchscheinender oder transparenter Wertgegenstände, da die Aussparungen 72, 74 bei Betrachtung im Durchlicht als helle, stark kontrastierende Bereiche vor der dunkel erscheinenden, verbleibenden Reflexionsschicht 70 zu erkennen sind.

Verglichen mit dem Sicherheitselement 40 enthält das Sicherheitselement 60 unterhalb der Reflexionsschicht 70 der Hologramme 42, 44 eine weitere Metallschicht 76 mit demselben optischen Erscheinungsbild wie die Reflexionsschicht 70. Bei Betrachtung des Sicherheitselements 60 aus einer anderen Richtung als den ausgezeichneten Betrachtungsrichtungen L und R erscheinen dann die teilweise demetallisierte Reflexionsschicht 70 der Hologramme und die durch die demetallisierten Bereiche 52, 54 hindurch sichtbare weitere Metallschicht 76 zusammen als homogene und strukturlose, metallisch glänzende Fläche, so dass die Kennzeichnungen aus diesen Richtungen nicht zu erkennen sind.

Es versteht sich, dass die Sicherheitselemente 40, 60 weitere Hologrammbereiche aufweisen können, die entsprechend mit den Hologrammbereichen 42, 44 verschachtelt sind.

Ein weiteres Ausführungsbeispiel der Erfindung ist in Fig. 8 dargestellt. Das dort gezeigte Sicherheitselement 80 weist neben zwei Hologrammbereichen 82 und 84, die mit für unterschiedliche Betrachtungswinkel ausgelegten Beugungsstrukturen versehen sind, einen dritten beugungsoptischen Bildbereich 88 auf. Die Hologrammbereiche 82, 84 und 88 sind, wie bereits bei Fig. 5 erläutert, jeweils in eine Mehrzahl schmaler Streifen 82-i, 84-i bzw. 88-i unterteilt, die ineinander verschachtelt angeordnet sind. Die Hologrammbereiche 82 und 84 weisen zudem die oben beschriebenen Kennzeichnungen auf, während der Hologrammbereich 88 ohne Kennzeichnungen ausgebildet ist und unter einem von den Hologrammbereichen 82 und 84 verschiedenen Betrachtungswinkel, beispielsweise bei senkrechter Betrachtung des Sicherheitselements 80, erkennbar ist.

Der Betrachter erkennt dann bei schräger Betrachtung von links das von den Streifen 82-i rekonstruierte Bild mit der dort eingeschriebenen ersten Kennzeichnung, bei schräger Betrachtung von rechts das von den Streifen 84-i rekonstruierte Bild mit der dort eingeschriebenen zweiten Kennzeichnung, und aus senkrechter Betrachtungsrichtung das von den Streifen 88-i rekonstruierte Bild ohne Kennzeichnung. Bei dieser Variante kann der Hologrammbereich 88 ein aufwändiges und ästhetisch ansprechendes Bild rekonstruieren, während die gekennzeichneten Hologrammbereiche 82 und 84 sehr einfach gestaltet sein können und aus der jeweiligen Betrachtungsrichtung beispielsweise nur die Kennzeichnung vor einem einfarbigen Hintergrund zeigen.

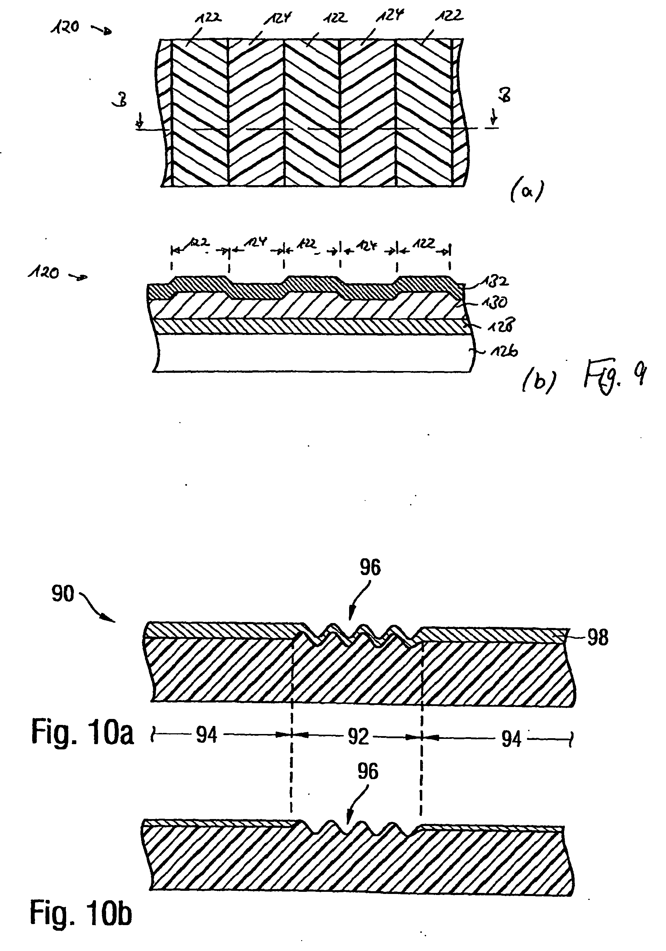

Bei dem Ausführungsbeispiel der Fig. 9 wird eine unterschiedlich starke Wechselwirkung der Laserstrahlung mit dem Sicherheitselement im Unterschied zu den bisher beschriebenen Ausführungsbeispielen durch den Einsatz geeignet ausgelegter Dünnschicht-Interferenzelemente mit Farbkippeffekt erreicht. Derartige Dünnschichtelemente weisen einen Schichtaufbau mit einer Reflexionsschicht, einer Absorberschicht und einer zwischen Reflexionsschicht und Absorberschicht angeordneten dielektrischen Abstandsschicht auf. Der Farbkippeffekt beruht dabei auf betrachtungswinkelabhängigen Interferenzeffekten durch Mehrfachreflexionen in den verschiedenen Teilschichten des Dünnschichtelements. Der Wegunterschied des an den verschiedenen Schichten reflektierten Lichts hängt einerseits von der optischen Dicke der dielektrischen Abstandsschicht ab und varüert andererseits mit dem jeweiligen Betrachtungswinkel.

Bedeutsam für die vorliegende Erfindung ist dabei, dass durch die Wahl der Dicke der dielektrischen Abstandsschicht neben dem Erscheinungsbild des Elements im sichtbaren Spektralbereich auch die Stärke der Absorption für Laserstrahlung außerhalb des sichtbaren Bereichs in weitem Bereich varüert werden kann. Werden zwei Teilbereiche eines Sicherheitselement mit Dünnschichtelementen mit deutlich unterschiedlicher Absorption für die Wellenlänge des Laserschreibers ausgestattet, kann die Kennzeichnung wie bei den oben beschriebenen Ausführungsbeispielen durchgeführt werden. Da die Kennzeichnung vorzugsweise mit Infrarotlasern erfolgt, können die Dünnschichtelemente der Teilbereiche nach Wunsch so ausgelegt werden, dass sie im sichtbaren Spektralbereich identische oder unterschiedliche Farbkippeffekte realisieren. Selbstverständlich kann die Kennzeichnung auch durch Laserschreiber im sichtbaren Spektralbereich erfolgen, die Variationsmöglichkeiten für die visuellen Erscheinungsbilder der Elemente sind dann allerdings in der Regel geringer.

Fig. 9(a) zeigt analog zur Ausgestaltung der Fig. 5 eine Aufsicht auf ein Sicherheitselement 120 mit einer alternierenden Abfolge streifenförmiger Subbereiche 122,124. Wie in der Querschnittsdarstellung der Fig. 9(b) zu erkennen, die einen Schnitt entlang der Linie B-B der Fig. 9(a) zeigt, weist das Sicherheitselement 120 eine Substratfolie 126 auf, auf die eine Aluminium-Reflexionsschicht 128, eine SiO₂-Dielektrikumsschicht 130 und eine semitransparente Chrom-Absorberschicht 132 aufgebracht sind. Erfindungsgemäß ist die Dicke der Dielektrikumsschicht 130 dabei in den Subbereichen 122 und 124 unterschiedlich gewählt, um eine unterschiedlich starke Absorption der für die Kennzeichnung verwendeten Laserstrahlung zu erreichen.

Beispielsweise kann bei Auslegung auf eine Beschriftung mit einem Nd:YAG-basierten Laserschreiber einer Wellenlänge von 1,064 µm durch geeignete Wahl der Schichtdicken erreicht werden, dass die Absorption für diese Wellenlänge in den Subbereichen 124 einen Wert von 0,8 oder sogar von 0,9 übersteigt, während sie in den Subbereichen 122 unterhalb von 0,4 liegt. Die Subbereiche 124 können daher selektiv mit einer Kennzeichnung versehen werden, ohne die gleichzeitig bestrahlten Subbereiche 122 zu demetallisieren.

Bei Verwendung verschiedener, auf den jeweiligen Subbereich abgestimmter Laserwellenlängen können auch beide Subbereiche 122,124 mit Kennzeichnungen versehen werden.

Die unterschiedlichen Schichtdicken der Dielektrikumsschicht 130 können beispielsweise durch den Einsatz von Masken in der Bedampfungsanlage oder durch den Aufdruck von im Vakuum verdampfenden Substanzen erreicht werden, die partiell den Auftrag von Material vermindern.

Fig.10 zeigt ein weiteres Beispiel im Querschnitt. Bei diesem Beispiel wird die Tatsache ausgenutzt, dass durch gezieltes Einführen eines Oberflächenreliefs 96 die Oberfläche des Sicherheitselements 90 in einem Teilbereich 92 vergrößert und die Dicke einer darauf abgeschiedenen Metallschicht 98 somit in diesem Teilbereich 92 verringert werden kann. Die dünnere Metallschicht im Bereich des Oberflächenreliefs 96 kann dann mit einer geringeren Laserleistung ablatiert werden als die dickere Metallschicht, so dass sich auch hier eine unterschiedlich starke Wechselwirkung der Teilbereiche 92 mit Oberflächenrelief und der Teilbereiche 94 ohne Oberflächenrelief mit der Laserstrahlung ergibt.

Fig. 10(a) zeigt schematisch ein Sicherheitselement 90 mit einem in einem Teilbereich 92 eingebrachten Oberflächenrelief 96 nach dem Bedampfungsschritt. Das Oberflächenrelief 96 ist im Ausführungsbeispiel in Form einer gekreuzten sinusförmigen Oberflächentopographie mit etwa 300 nm Höhe und einer Periode von 300 nm in x- und y-Richtung ausgebildet. Es ist deutlich zu erkennen, dass der mit dem Oberflächenrelief versehene erste Teilbereich 92 aufgrund der lokal vergrößerten Oberfläche, verglichen mit dem unmodifizierten Teilbereich 94, nur etwa die halbe Metallschichtdicke aufweist.

Wie in Fig. 10(b) gezeigt, kann somit durch geeignete Wahl der Laserleistung erreicht werden, dass die Metallschicht im oberflächenmodulierten Teilbereich 92 mit der dünneren Metallschicht vollständig entfernt wird, während im flachen Bereich 94 mit der dickeren Metallschicht eine gewisse Metallschichtdicke verbleibt. Bei dieser Variante kann auch mit unpolarisiertem Laserlicht oder mit zirkular polarisiertem Laserlicht gearbeitet werden.

## Patentansprüche

1. Sicherheitselement, insbesondere für ein Wertdokument, mit einer Reflexionsschicht, die durch Einwirkung von Laserstrahlung mit visuell erkennbaren Kennzeichnungen in Form von Mustern, Buchstaben, Zahlen oder Bildern markiert ist, wobei die Reflexionsschicht einen ersten Teilbereich mit einer Interferenzstruktur und einen zweiten Teilbereich aufweist, wobei die beiden Teilbereiche mit der Laserstrahlung unterschiedlich wechselwirken und aus ineinander verschachtelten Subbereichen gebildet sind, so dass die Kennzeichnungen aufgrund einer durch die Einwirkung der Laserstrahlung bewirkten Änderung der optischen Eigenschaften der Reflexionsschicht zumindest eines der beiden Teilbereiche visuell erkennbar sind, **dadurch gekennzeichnet, dass** entweder
a) der erste Teilbereich als Interferenzstruktur eine Reliefstruktur in Form eines Gittermusters enthält, das durch eine erste Gitterkonstante und eine erste Orientierung der Gitterlinien definiert ist, der zweite Teilbereich eine Reliefstruktur in Form eines Gittermusters enthält, das durch eine zweite Gitterkonstante und eine zweite Orientierung der Gitterlinien definiert ist, wobei sich die zweite Gitterkonstante und/ oder die zweite Orientierung der Gitterlinien des zweiten Teilbereichs von der ersten Gitterkonstante bzw. der ersten Orientierung der Gitterlinien des ersten Teilbereichs unterscheidet, oder
b) der erste und zweite Teilbereich als Interferenzstruktur jeweils ein Dünnschichtelement mit Farbkippeffekt enthalten, das eine Reflexionsschicht, eine Absorberschicht und eine zwischen der Reflexionsschicht und der Absorberschicht angeordnete dielektrische Abstandsschicht aufweist und die Dicke der dielektrischen Abstandsschicht der Dünnschichtelemente in beiden Teilbereichen unterschiedlich ist.

2. Sicherheitselement nach Anspruch 1, **dadurch gekennzeichnet, dass** in Variante a) die zweite Orientierung der Gitterlinien im Wesentlichen senkrecht zur ersten Orientierung steht und/oder dass die beiden Teilbereiche ein Gittermuster mit einer Gitterkonstante von 200 bis 2000 nm, vorzugsweise von 500 bis 1000 nm, und mit unterschiedlicher Orientierung der Gitterlinien aufweisen.

3. Sicherheitselement nach Anspruch 1 oder 2, **dadurch gekennzeichnet, dass** in Variante a) die Gittermuster des ersten und zweiten Teilbereichs unterschiedliche Gitterprofile aufweisen.

4. Sicherheitselement nach Anspruch 1 oder 2, **dadurch gekennzeichnet, dass** in Variante a) die Gittermuster durch Rechteckgitter gebildet sind und dass die Gitterlinien bevorzugt elektrisch voneinander isoliert sind, besonders bevorzugt durch metallfreie Bereiche an den Flanken des Rechteckgitters.

5. Sicherheitselement nach wenigstens einem der Ansprüche 1 bis 4, **dadurch gekennzeichnet, dass** die Kennzeichnungen der beiden Teilbereiche ebenfalls ineinander verschachtelt sind.

6. Sicherheitselement nach wenigstens einem der Ansprüche 1 bis 5, **dadurch gekennzeichnet, dass** die Kennzeichnungen nur in den ersten Teilbereich eingebracht sind oder dass in beiden Teilbereichen Kennzeichnungen eingebracht sind.

7. Verfahren zum Erzeugen eines mit visuell erkennbaren Kennzeichnungen in Form von Mustern, Buchstaben, Zahlen oder Bildern versehenen Sicherheitselements, mit den Verfahrensschritten:
a) Auswählen einer Laserquelle für das Einbringen der Kennzeichnungen,
b) Erzeugen eines Sicherheitselements mit einem ersten Teilbereich mit einer Reliefstruktur und mit einem zweiten Teilbereich, wobei die Teilbereiche aus ineinander verschachtelten Subbereichen gebildet werden, und wobei
der erste Teilbereich des Sicherheitselements als Reliefstruktur mit einem Gittermuster erzeugt wird, das durch eine erste Gitterkonstante und eine erste Orientierung der Gitterlinien definiert ist, der zweite Teilbereich des Sicherheitselements als Reliefstruktur mit einem Gittermuster erzeugt wird, das durch eine zweite Gitterkonstante und eine zweite Orientierung der Gitterlinien definiert ist, wobei sich die zweite Gitterkonstante und/oder die zweite Orientierung der Gitterlinien des zweiten Teilbereichs von der ersten Gitterkonstante bzw. der ersten Orientierung der Gitterlinien des ersten Teilbereichs unterscheidet,
c) Aufbringen einer Reflexionsschicht auf den ersten Teilbereich mit Reliefstruktur und den zweiten Teilbereich, so dass die mit der Reflexionsschicht versehenen Teilbereiche mit der Laserstrahlung der ausgewählten Laserquelle unterschiedlich stark wechselwirken, und
d) Beaufschlagen des ersten und zweiten Teilbereichs mit Laserstrahlung der ausgewählten Laserquelle, um die Reflexionsschicht mit den Kennzeichnungen zu markieren und die Kennzeichnungen aufgrund einer durch die Einwirkung der Laserstrahlung bewirkten Änderung der optischen Eigenschaften der Reflexionsschicht zumindest eines der beiden Teilbereiche visuell erkennbar zu machen.

8. Verfahren nach Anspruch 7, **dadurch gekennzeichnet, dass** das Sicherheitselement zur Kennzeichnung mit Laserstrahlung beaufschlagt wird, deren Wellenlänge größer als die erste und/ oder die zweite Gitterkonstante ist.

9. Verfahren nach Anspruch 7 oder 8, **dadurch gekennzeichnet, dass** zur Kennzeichnung der Teilbereiche die Abhängigkeit der Wechselwirkung von der Polarisation der Laserstrahlung und/ oder die Abhängigkeit der Wechselwirkung von der Gitterkonstante in den beiden Teilbereichen und/oder die Abhängigkeit der Wechselwirkung von der Orientierung der Gitterlinien in den beiden Teilbereichen und/ oder die Abhängigkeit der Wechselwirkung von dem Gitterprofil in den beiden Teilbereichen ausgenutzt wird.

10. Verfahren nach wenigstens einem der Ansprüche 7 bis 9, **dadurch gekennzeichnet, dass** das Sicherheitselement zur Kennzeichnung mit linear polarisierter Laserstrahlung beaufschlagt wird, deren Polarisationsvektor im Wesentlichen parallel zu den Gitterlinien des Teilbereichs gewählt ist, in den die Kennzeichnung eingebracht werden soll.

11. Verfahren zum Erzeugen eines mit visuell erkennbaren Kennzeichnungen in Form von Mustern, Buchstaben, Zahlen oder Bildern versehenen Sicherheitselements, mit den Verfahrensschritten:
a) Auswählen einer Laserquelle für das Einbringen der Kennzeichnungen,
b) Erzeugen eines Sicherheitselements mit einem ersten und zweiten Teilbereich, wobei die Teilbereiche aus ineinander verschachtelten Subbereichen gebildet werden, und wobei in jedem Teilbereich Dünnschichtelemente mit einer Reflexionsschicht, einer dielektrischen Abstandsschicht und einer Absorberschicht erzeugt werden und wobei die Dünnschichtelemente in dem ersten und zweiten Teilbereich mit unterschiedlicher Dicke der Abstandsschicht erzeugt werden, so dass die beiden Teilbereiche mit der Laserstrahlung der ausgewählten Laserquelle unterschiedlich stark wechselwirken, und
c) Beaufschlagen des ersten und zweiten Teilbereichs mit Laserstrahlung der ausgewählten Laserquelle, um die Reflexionsschicht mit den Kennzeichnungen zu markieren und die Kennzeichnungen aufgrund einer durch die Einwirkung der Laserstrahlung bewirkten Änderung der optischen Eigenschaften der Reflexionsschicht zumindest eines der beiden Teilbereiche visuell erkennbar zu machen.

12. Verfahren nach wenigstens einem der Ansprüche 7 bis 11, **dadurch gekennzeichnet, dass** die Laserleistung oder Laserenergie so eingestellt wird, dass ihre Intensität aufgrund der unterschiedlichen Wechselwirkungsstärke zur Entfernung der Reflexionsschicht im ersten Teilbereich ausreicht und im zweiten Teilbereich zur Entfernung der Reflexionsschicht nicht ausreichend ist.

13. Verfahren nach wenigstens einem der Ansprüche 7 bis 12, **dadurch gekennzeichnet, dass** das Sicherheitselement zur Kennzeichnung mit einem aufgeweiteten Laserstrahl beaufschlagt wird, der zumindest teilweise beide Teilbereiche zugleich erfasst.

14. Datenträger, insbesondere Wertdokument, wie Banknote, Ausweiskarte oder dergleichen, mit einem Sicherheitselement nach einem der Ansprüche 1 bis 6, oder einem nach wenigstens einem der Ansprüche 7 bis 13 herstellbaren Sicherheitselement.

15. Endlosfolie, insbesondere Prägefolie, mit einem Sicherheitselement nach einem der Ansprüche 1 bis 6, oder einem nach wenigstens einem der Ansprüche 7 bis 13 herstellbaren Sicherheitselement.

## Claims

1. A security element, especially for a value document, having a reflection layer that, through the action of laser radiation, is marked with visually perceptible markings in the form of patterns, letters, numbers or images, the reflection layer exhibiting a first fractional region having an interference pattern and a second fractional region, the two fractional regions interacting differently with the laser radiation and being formed from nested sub-regions, such that, due to a change in the optical properties of the reflection layer of at least one of the two fractional regions, caused by the action of the laser radiation, the markings are visually perceptible, **characterized in that** either
a) the first fractional region includes, as the interference pattern, a relief pattern in the form of a grating pattern that is defined by a first grating constant and a first orientation of the grating lines, the second fractional region includes a relief pattern in the form of a grating pattern that is defined by a second grating constant and a second orientation of the grating lines, the second grating constant and/or the second orientation of the grating lines of the second fractional region differing from the first grating constant or the first orientation of the grating lines of the first fractional region, or
b) the first and second fractional region each include, as the interference pattern, a thin film element having a color-shift effect that exhibits a reflection layer, an absorber layer and a dielectric spacing layer arranged between the reflection layer and the absorber layer, and the thickness of the dielectric spacing layer of the thin film elements is different in the two fractional regions.

2. The security element according to claim 1, **characterized in that**, in variant a), the second orientation of the grating lines is substantially normal to the first orientation and/or **in that** the two fractional regions exhibit a grating pattern having a grating constant from 200 to 2,000 nm, preferably from 500 to 1,000 nm, and having different orientations of the grating lines.

3. The security element according to claim 1 or 2, **characterized in that**, in variant a), the grating patterns of the first and second fractional region exhibit different grating profiles.

4. The security element according to claim 1 or 2, **characterized in that**, in variant a), the grating patterns are formed by rectangular gratings, and **in that** the grating lines are preferably electrically insulated from each other, particularly preferably by metal-free regions at the sides of the rectangular grating.

5. The security element according to at least one of claims 1 to 4, **characterized in that** the markings in the two fractional regions are likewise nested.

6. The security element according to at least one of claims 1 to 5, **characterized in that** the markings are introduced only in the first fractional region, or **in that** markings are introduced in both fractional regions.

7. A method for producing a security element provided with visually perceptible markings in the form of patterns, letters, numbers or images, having the method steps:
a) selecting a laser source for the introduction of the markings,
b) producing a security element having a first fractional region having a relief pattern, and having a second fractional region, the fractional regions being formed from nested sub-regions, and
the first fractional region of the security element being produced as a relief pattern having a grating pattern that is defined by a first grating constant and a first orientation of the grating lines, the second fractional region of the security element being produced as a relief pattern having a grating pattern that is defined by a second grating constant and a second orientation of the grating lines, the second grating constant and/or the second orientation of the grating lines of the second fractional region differing from the first grating constant or the first orientation of the grating lines of the first fractional region,
c) applying a reflection layer to the first fractional region having a relief pattern and the second fractional region, such that the fractional regions provided with the reflection layer interact with the laser radiation of the selected laser source to a different extent, and
d) impinging on the first and second fractional region with laser radiation from the selected laser source to mark the reflection layer with the markings and to make the markings visually perceptible due to a change in the optical properties of the reflection layer of at least one of the two fractional regions, caused by the action of the laser radiation.

8. The method according to claim 7, **characterized in that**, for marking, the security element is impinged on with laser radiation whose wavelength is greater than the first and/or the second grating constant.

9. The method according to claim 7 or 8, **characterized in that**, for marking the fractional regions, the dependence of the interaction on the polarization of the laser radiation and/or the dependence of the interaction on the grating constant in the two fractional regions and/or
the dependence of the interaction on the orientation of the grating lines in the two fractional regions and/or the dependence of the interaction on the grating profile in the two fractional regions is utilized.

10. The method according to at least one of claims 7 to 9, **characterized in that**, for marking, the security element is impinged on with linearly polarized laser radiation whose polarization vector is chosen to be substantially parallel to the grating lines of the fractional region into which the marking is to be introduced.

11. A method for producing a security element provided with visually perceptible markings in the form of patterns, letters, numbers or images, having the method steps:
a) selecting a laser source for the introduction of the markings,
b) producing a security element having a first and second fractional region, the fractional regions being formed from nested sub-regions and, in each fractional region, thin film elements being produced having a reflection layer, a dielectric spacing layer and an absorber layer, and the thin film elements in the first and second fractional region being produced having different thicknesses of the spacing layer, such that the two fractional regions interact with the laser radiation of the selected laser source to a different extent, and
c) impinging on the first and second fractional region with laser radiation from the selected laser source to mark the reflection layer with the markings and to make the markings visually perceptible due to a change in the optical properties of the reflection layer of at least one of the two fractional regions, caused by the action of the laser radiation.

12. The method according to at least one of claims 7 to 11, **characterized in that** the laser power or laser energy is set such that, due to the different extent of interaction, its intensity is sufficient to remove the reflection layer in the first fractional region, and in the second fractional region is not sufficient to remove the reflection layer.

13. The method according to at least one of claims 7 to 12, **characterized in that**, for marking, the security element is impinged on with an expanded laser beam that at least partially includes both fractional regions simultaneously.

14. A data carrier, especially a value document, such as a banknote, identification card or the like, having a security element according to one of claims 1 to 6, or a security element manufacturable according to at least one of claims 7 to 13.

15. A continuous foil, especially an embossing foil, having a security element according to one of claims 1 to 6, or a security element manufacturable according to at least one of claims 7 to 13.

## Revendications

1. Elément de sécurité, en particulier pour un document de valeur, comportant une couche de réflexion, qui est marquée sous l'action d'un faisceau laser par des identifications reconnaissables à l'oeil nu sous forme de modèles, de lettres, de chiffres ou d'images, la couche de réflexion présentant une première zone partielle, ayant une structure d'interférence, et une deuxième zone partielle, les deux zones partielles interagissant différemment avec le faisceau laser et étant formées de sous-zones, emboîtées les unes dans les autres, de telle sorte que les identifications soient reconnaissables à l'oeil nu, du fait d'une modification, provoquée par l'action du rayonnement laser, des propriétés optiques de la couche de réflexion d'au moins l'une des deux zones partielles, **caractérisé en ce que**
a) la première zone partielle contient en tant que zone d'interférence une structure en relief sous forme d'un modèle de réseau, qui est défini par une première constante de réseau et une première orientation des traits du réseau, la deuxième zone partielle contient une structure en relief sous forme d'un modèle de réseau, qui est défini par une deuxième constante de réseau et une deuxième orientation des traits du réseau, la deuxième constante de réseau et/ou la deuxième orientation des traits de réseau de la deuxième zone partielle étant différentes, respectivement de la première constante de réseau et de la première orientation des traits de réseau de la première zone partielle, ou
b) la première et la deuxième zones partielles contiennent chacune, en tant que structure d'interférence, un élément en couche mince ayant un effet goniochromatique, qui comprend une couche de réflexion, une couche d'absorption et une couche d'écartement diélectrique, disposée entre la couche de réflexion et la couche d'absorption, et l'épaisseur de la couche d'écartement diélectrique des éléments en couche mince est différente dans les deux zones partielles.

2. Elément de sécurité selon la revendication 1, **caractérisé en ce que**, dans la variante a), la deuxième orientation des traits du réseau est pour l'essentiel perpendiculaire à la première orientation, et/ou les deux zones partielles comportent un modèle de réseau ayant une constante de réseau de 200 à 2000 nm, de préférence de 500 à 1000 nm, les traits du réseau ayant des orientations différentes.

3. Elément de sécurité selon la revendication 1 ou 2, **caractérisé en ce que**, dans la variante a), les modèles de réseau de la première et de la deuxième zones partielles comprennent des profils de réseau différents.

4. Elément de sécurité selon la revendication 1 ou 2, **caractérisé en ce que**, dans la variante a), les modèles de réseau sont formés par des réseaux rectangulaire, et les traits du réseau sont de préférence électriquement isolés les uns des autres, d'une manière particulièrement préférée par des zones sans métal contre les flancs du réseau rectangulaire.

5. Elément de sécurité selon au moins l'une des revendications 1 à 4, **caractérisé en ce que** les identifications des deux zones partielles sont elles aussi emboîtées l'une dans l'autre.

6. Elément de sécurité selon au moins l'une des revendications 1 à 5, **caractérisé en ce que** les identifications ne sont incorporées que dans la première zone partielle, ou que des identifications sont incorporées dans les deux zones partielles.

7. Procédé de production d'un élément de sécurité pourvu d'identifications, reconnaissables à l'oeil nu, sous forme de modèles, de lettres, de chiffres ou d'images, comportant les étapes suivantes :
a) sélection d'une source laser pour incorporer les identifications,
b) production d'un élément de sécurité comportant une première zone partielle ayant une structure en relief et une deuxième zone partielle, les zones partielles étant formées par des sous-zones emboîtées les unes dans les autres, et
la première zone partielle de l'élément de sécurité étant produite, en tant que structure en relief, avec un modèle de réseau, qui est défini par une première constante de réseau et une première orientation des traits du réseau, la deuxième zone partielle de l'élément de sécurité étant produite, en tant que structure en relief, avec un modèle de réseau qui est défini par une deuxième constante de réseau et une deuxième orientation des traits du réseau, la deuxième constante de réseau et/ou la deuxième orientation des traits de réseau de la deuxième zone partielle différant respectivement de la première constante de réseau et de la première orientation des traits du réseau de la première zone partielle,
c) application d'une couche de réflexion sur la première zone partielle ayant une structure en relief et sur la deuxième zone partielle de telle sorte que les zones partielles pourvues de la couche de réflexion interagissent avec des forces différentes avec le rayonnement laser de la source laser sélectionnée, et
d) exposition de la première et de la deuxième zones partielles à un rayonnement laser provenant de la source laser sélectionnée, pour marquer des identifications la couche de réflexion et pour rendre reconnaissables à l'oeil nu les identifications sur la base d'une modification, provoquée sous l'action du rayonnement laser, des propriétés optiques de la couche de réflexion d'au moins l'une des deux zones partielles.

8. Procédé selon la revendication 7, **caractérisé en que** l'élément de sécurité est, pour l'identification, exposé à un rayonnement laser, dont la longueur d'onde est supérieure à la première et/ou à la deuxième constante de réseau.

9. Procédé selon la revendication 7 ou 8, **caractérisé en ce que**, pour identifier les zones partielles, on utilise le fait que l'interaction dépend de la polarisation du rayonnement laser, et/ou que l'interaction dépend de la constante de réseau dans les deux zones partielles, et/ou que l'interaction dépend de l'orientation des traits du réseau dans les deux zones partielles et/ou que l'interaction dépend du profil de réseau dans les deux zones partielles.

10. Procédé selon au moins l'une des revendications 7 à 9, **caractérisé en ce que** l'élément de sécurité est, pour l'identification, exposé à un rayonnement laser à polarisation rectiligne, dont le vecteur de polarisation est pour l'essentiel choisi parallèle aux traits du réseau de la zone partielle dans laquelle doit être incorporée l'identification.

11. Procédé de production d'un élément de sécurité pourvu d'identifications reconnaissables à l'oeil nu sous forme de modèles, de lettres, de chiffres ou d'images, comportant les étapes suivantes :
a) sélection d'une source laser pour l'incorporation des identifications,
b) production d'un élément de sécurité comportant une première et une deuxième zones partielles, les zones partielles étant formées de sous-zones emboîtées les unes dans les autres, des éléments en couche mince ayant une couche de réflexion, une couche d'écartement diélectrique et une couche d'absorption étant produits dans chaque zone partielle, les éléments en couche mince étant, dans la première et dans la deuxième zones partielles, produits avec des épaisseurs différentes de la couche d'écartement, de telle sorte que les deux zones partielles interagissent avec des forces différentes avec le faisceau laser de la source laser sélectionnée, et
c) exposition de la première et de la deuxième zones partielles à un rayonnement laser de la source laser sélectionnée, pour marquer des identifications la couche de réflexion et rendre reconnaissables, à l'oeil nu, les caractéristiques sur la base d'une modification, provoquée sous l'action du rayonnement laser, des propriétés optiques de la couche de réflexion d'au moins l'une des deux zones partielles.

12. Procédé selon au moins l'une des revendications 7 à 11, **caractérisé en ce que** la puissance laser ou l'énergie laser est ajustée de telle sorte que son intensité suffise, sur la base des forces d'interaction différentes, à l'élimination de la couche de réflexion dans la première zone partielle, et ne soit pas suffisante dans la deuxième zone partielle pour éliminer la couche de réflexion.

13. Procédé selon au moins l'une des revendications 7 à 12, **caractérisé en ce que** l'élément de sécurité est, pour l'identification, exposé à un faisceau laser élargi, qui englobe simultanément au moins partiellement les deux zones partielles.

14. Support de données, en particulier document de valeur, tel qu'un billet de banque, une carte d'identité ou analogues, comportant un élément de sécurité selon l'une des revendications 1 à 6 ou un élément de sécurité pouvant être fabriqué selon au moins l'une des revendications 7 à 13.

15. Feuille continue, en particulier feuille d'estampage, comportant un élément de sécurité selon l'une des revendications 1 à 6 ou un élément de sécurité pouvant être fabriqué selon au moins l'une des revendications 7 à 13.
